(19) Europäisches Patentamt
European Patent Office
Office européen des brevets

(11) **EP 1 513 069 B1**

(12) **EUROPEAN PATENT SPECIFICATION**

(45) Date of publication and mention
of the grant of the patent:
**12.11.2008 Bulletin 2008/46**

(51) Int Cl.:
***G06F 13/16*** (2006.01)

(21) Application number: **04020891.0**

(22) Date of filing: **02.09.2004**

(54) **Resource management apparatus**

Vorrichtung zur Verwaltung von Ressourcen

Appareil pour gérer des ressources

(84) Designated Contracting States:
**DE FR GB IT**

(30) Priority: **04.09.2003 JP 2003312463**

(43) Date of publication of application:
**09.03.2005 Bulletin 2005/10**

(73) Proprietor: **MATSUSHITA ELECTRIC INDUSTRIAL CO., LTD.**
**Kadoma-shi, Osaka 571-8501 (JP)**

(72) Inventors:
• **Kawamoto, Isao**
**Ashiya-shi**
**Hyogo 659-0062 (JP)**
• **Horii, Seiji**
**Kashiwara-shi**
**Osaka 582-0018 (JP)**
• **Takai, Yuji**
**Takatsuki-shi**
**Osaka 569-0071 (JP)**
• **Kishi, Tetsuji**
**Kadoma-shi**
**Osaka 571-0058 (JP)**

• **Baba, Takahide**
**Nishinomiya-shi**
**Hyogo 662-0978 (JP)**
• **Murakami, Daisuke**
**Kyoto-shi**
**Kyoto 612-8006 (JP)**
• **Watanabe, Yoshiharu**
**Kyoto-shi**
**Kyoto 612-8485 (JP)**
• **Fukuyama, Toshihiro**
**Kadoma-shi**
**Osaka 571-0021 (JP)**

(74) Representative: **Urner, Peter**
**TER MEER STEINMEISTER & PARTNER GbR**
**Patentanwälte**
**Mauerkircherstrasse 45**
**81679 München (DE)**

(56) References cited:
**EP-A- 0 380 844       EP-A- 0 608 663**
**US-A- 6 052 738       US-A1- 2003 033 490**

**Description**

The present invention relates to a resource management apparatus accessing from a plurality of bus masters to a common resource. As the bus master, a processor, DSP, DMA, or the like, can be mentioned. The common resource includes a memory, a peripheral input/output device, and the like, which are shared by the plurality of bus masters.

When the plurality of bus masters and the common resource are connected via a bus, generating a conflict for a right to use the bus among the plurality of bus masters, a bus arbitrator is used.

In general, the bus master operates at a higher speed than the common resource does. Therefore, time required for the bus master to transfer a certain volume of information is shorter than time required for the common resource to process the certain volume of information. The common resource, which is currently processing information transferred from a first bus master, cannot concurrently process information transferred from the next bus master. Then, it becomes necessary to set intervals of selecting from the information transferred from the bus masters to be longer than the time required for the common resource to process the information. This, however, creates the problem that an efficient operation of the common resource is not possible.

It is desirable that the interval of selecting information from one bus master (selection interval) and the time required for the common resource to process the information from the bus master are equal to each other. However, it is not possible for the respective times to be exactly identical to each other because an operation frequency of the bus master and an operation frequency of a control device controlling the common resource are different.

Further, there are cases where a specific processing such as precharge or refresh is necessarily executed, as in SDRAM. Therefore, if the information-selection intervals are fixed, the information processing cannot be completed within a predetermined time period when the processing time of the common resource fluctuates.

As an option to solve the problems , a buffer may be provided between an information selection unit for selecting information and the common resource for processing the information. However, such a configuration still includes the following problems.

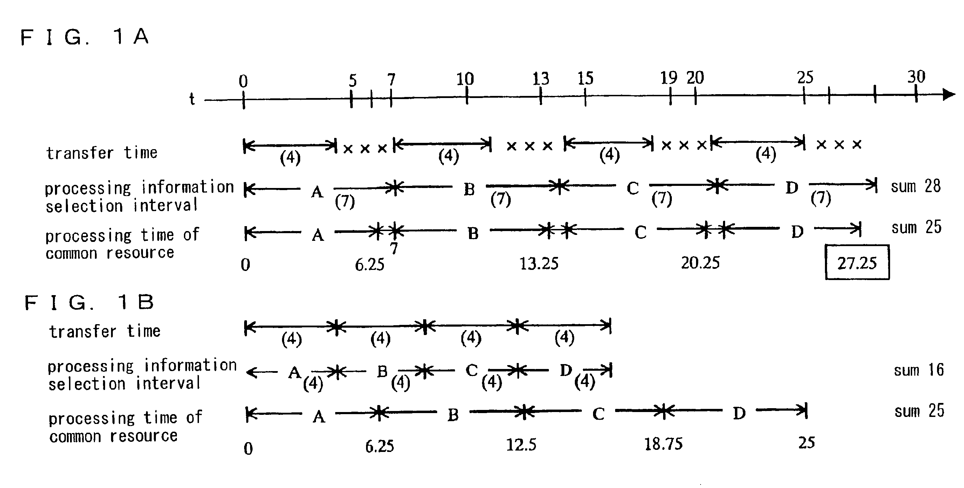

Fig. 1A shows a possible method, wherein a bus master is given a certain length of standby time until the processing of information transferred from a previous bus master is completed, and then, the selection intervals of an information selection unit are set to be longer than the processing time of the common resource, thereby adjusting the operation times of the bus master and the common resource.

However, the method generates time periods when neither of the bus master nor the common resource is involved in any processing, which makes it difficult for the bus master and the common resource to be efficiently used.

As a possible method shown in Fig. 1B, information can be consecutively stored in a buffer in response to an operation speed of a bus master. However, because of a limited capacity of the buffer, the processing of necessary information is not possible when the buffer cannot accept any information beyond its capacity.

SUMMARY OF THE INVENTION

Therefore, a main object of the present invention is to provide a resource management apparatus capable of efficiently using bus masters and a common resource by adjusting timings for selecting from information transferred by the bus masters

Other objects, features, and advantages of the present invention will become clear from the following description.

Hereinafter, a plurality of components is described. The components may be formed from hardware, software, or a combination of hardware and software.

In order to achieve the object, a resource management apparatus according to the present invention comprises:

an information selection unit having an operation speed different from an operation speed of a common resource and selecting information comprised of a command and data transferred from any of a plurality of bus masters to the common resource;

a buffer unit storing the information selected by the information selection unit; and

a selection interval setting unit setting selection interval information; and

a timing adjustment unit determining a selection interval based on the selection interval information set in the selection interval setting unit and controlling timings of selecting the information in the information selection unit so that a sum of selection time required for selecting a plurality of predetermined volumes of information in the information selection unit and a sum of processing time of the common resource are equal to each other.

According to the configuration, the timing adjustment unit is provided so that the sum of the selection time for selecting the plurality of predetermined volumes of information in the information selection unit and the sum of the processing time in the common resource are substantially equal to each other to thereby substantially equalize a mean value of information transfer intervals of the bus masters and a mean value of the processing time of the common resource. As a result, the bus masters and the common resource can be both efficiently operated, and a suitable volume of information can be stored in the buffer unit.

As a preferred mode of the foregoing configuration, the timing adjustment unit controls the timings of selecting the information in the information selection unit so that the time for selecting a singular predetermined volume of information in the information selection unit and the processing time in the common resource are substantially equal to each other.

In the foregoing mode, the time for selecting the singular predetermined volume of information and the processing time in the common resource are substantially equal to each other, thereby further efficiently operating the bus masters and the common resource and a more suitable volume of information can be stored in the buffer unit.

As another preferred mode of the foregoing configuration, the timing adjustment unit can change a comparison reference value for counting depending on the information volume stored in the buffer unit. In that case, the timing adjustment unit lengthens the selection intervals by increasing the comparison reference value when the information volume stored in the buffer unit exceeds a threshold value.

In the foregoing mode, as a result, the information volume stored in the buffer unit can be adjusted, and the bus masters and the common resource can be more efficiently operated. Further, a more suitable volume of information can be stored in the buffer unit.

As still another preferred mode of the foregoing configuration, the timing adjustment unit prohibits the information selection in the information selection when the information volume stored in the buffer unit exceeds the threshold value and there is no transfer of information from ahighest-prioritybus master to the information selection unit.

In the foregoing mode, when the information volume exceeding the threshold value is stored in the buffer unit, the information stored in the buffer unit is processed avoiding the selection of low-priority information. The information volume in the buffer unit can be thus reduced.

The foregoing and other aspects of the invention will become apparent from the following description of the invention when considered in conjunction with the accompanying drawings.

BRIEF DESCRIPTION OF THE DRAWINGS

Figs. 1A and 1B are relationship diagrams with regard to information transfer time, selection intervals, and processing time of a common resource in a conventional resource management apparatus.

Fig. 2 is a block diagram illustrating a configuration of a system according to an embodiment 1 of the present invention.

Fig. 3 is a flow chart of the system according to the embodiment 1.

Figs. 4A and 4B are views illustrating an operation of a clock counter according to the embodiment 1.

Figs. 5A, 5B, and 5C are relationship diagrams with regard to information transfer time, selection intervals, and processing time of a common resource in the resource management apparatus according to the embodiment 1.

Fig. 6 is a view illustrating an operation of a timing adjustment unit according to the embodiment 1.

Fig. 7 is a block diagram illustrating a configuration of a system according to an embodiment 2 of the present invention.

Fig. 8 is a flow chart of the system according to the embodiment 2.

Fig. 9 is a block diagram illustrating a configuration of a system according to a modification of the embodiment 2.

Fig. 10 is a flow chart of the system according to an embodiment 3 of the present invention.

Fig. 11 is a table showing an example of priority orders according to the embodiment 3.

Fig. 12 is a flow chart of a system according to an embodiment 4 of the present invention.

Fig. 13 is a block diagram illustrating a configuration of a system according to an embodiment 5 of the present invention.

Fig. 14 is a flow chart of the system according to the embodiment 5.

Fig. 15 is a block diagram illustrating a configuration of a system according to an embodiment 6 of the present invention.

Fig. 16 is a view illustrating an operation per clock in the system according to the embodiment 6.

In all these figures, like components are indicated by the same numerals

DESCRIPTION OF THE PREFERRED EMBODIMENTS

Hereinafter, a resource management apparatus according to the present invention is described referring to the drawings.

EMBODIMENT 1

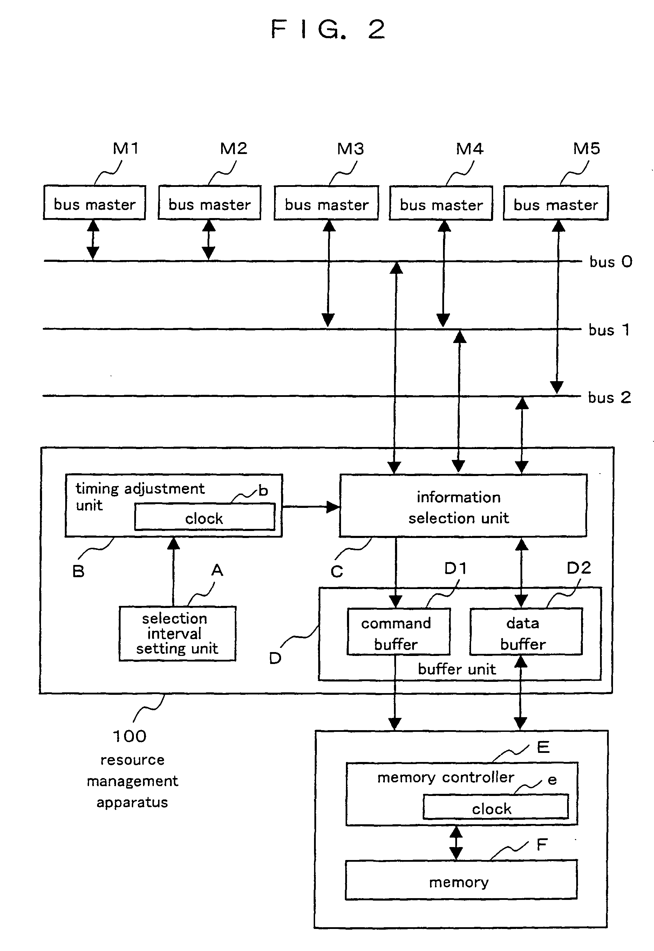

A resource management apparatus 100 in a system shown in Fig. 2 comprises a selection interval setting unit A, a timing adjustment unit B, an information selection unit C for selecting from information in conflict with one another transferred by a plurality of bus masters, and a buffer unit D. The buffer unit D is comprised of a command buffer D1 and a data buffer D2. In a peripheral area of the resource management apparatus 100, a plurality of bus masters M1, M2, M3, M4 and M5, a memory controller E, a common memory F as an example of a common resource shared by the plurality of bus masters M1 - M5. As the bus master, a processor, DSP, DMA, or the like, can be mentioned.

The command buffer D1 and the data buffer D2 store the information from the bus master selected by the information selection unit C. The memory controller E interprets the information stored in the command buffer D1 and generates a signal to comply with a protocol of the memory, or the like.

Priority orders are set in respective buses and bus masters. A bus master arbitrator (not shown) is provided for the plurality of bus masters M1 - M5. The bus master arbitrator arbitrates simultaneous accesses made by at least two of the bus masters M1 - M5 with respect to the common memory F according to a priority right. The bus master access-permitted by the bus master arbitrator transfers a command with respect to the common memory F via the information selection unit C. The information selection unit C selects the information transferred from the bus master permitted to access the common memory F via a bus based on the priority order of the buses.

An operation frequency of a clock counter b in the timing adjustment unit B and an operation frequency of a clock counter e in the memory controller E are different to each other. As a result, an operation frequency of the information selection unit C and an operation frequency of the memory controller E are also different to each other.

The buffer unit D may be formed on a same chip together with the information selection unit C, or may be formed on a different chip separately from the information selection unit C. The data buffer D2 is provided in singular, however a data buffer may be provided for each bus master.

The selection interval setting unit A selects a selection interval in the information selection unit C. The timing adjustment unit B generates a required selection signal based on the selection interval from the selection interval setting unit A, and transmits the signal to the information selection unit C. The selection signal represents a timing of the information selection. The timing adjustment unit B comprises the clock counter b. The clock counter b counts clocks based on the selection intervals. The information selection unit C selects from the information transferred from the bus masters at the timing indicated by the selection signal.

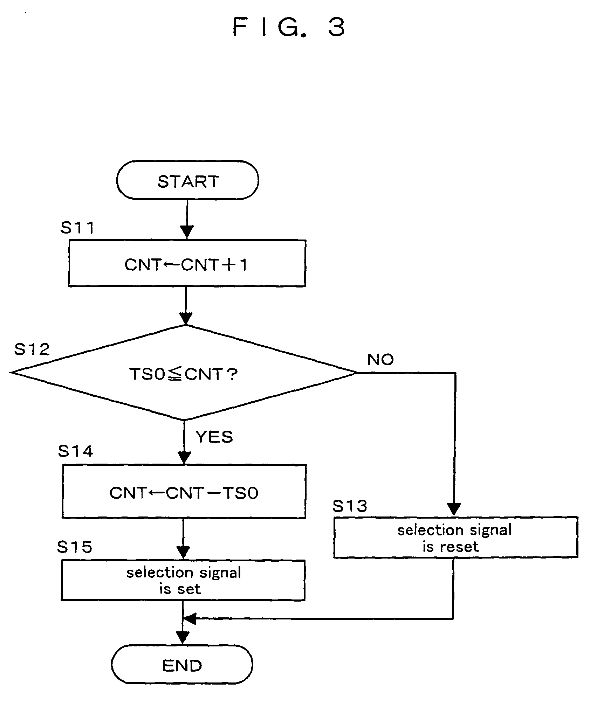

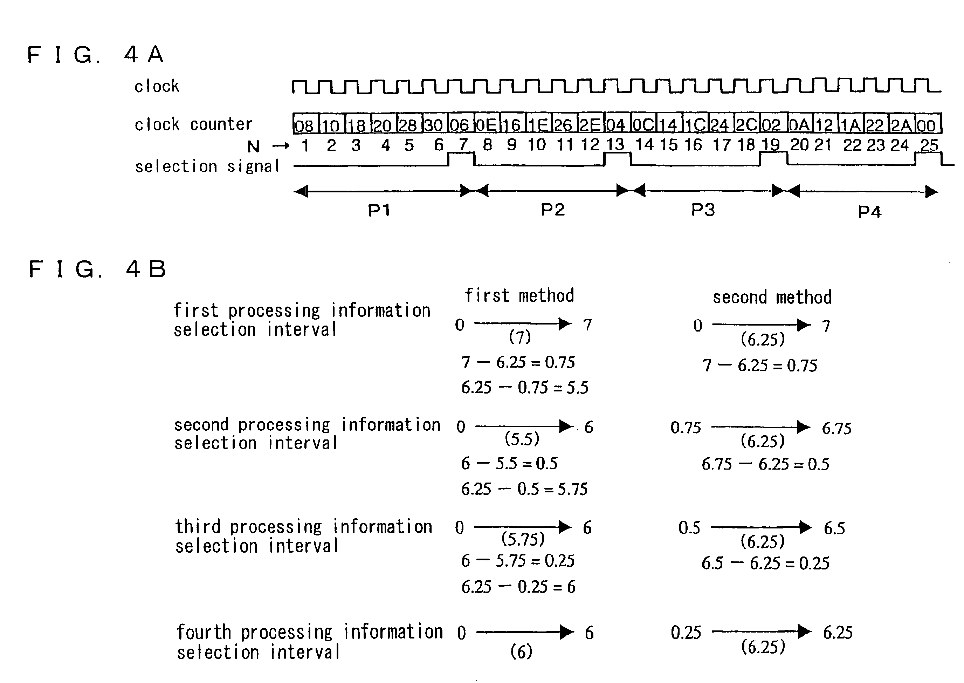

Fig. 3 is a flow chart illustrating an operation of the timing adjustment unit B per clock. Figs. 4A illustrate timings of outputting the selection signal serving to select from the information of the bus masters.

The selection interval setting unit A comprises a register, the register storing values by means of a fixed decimal point of eight bits, wherein upper five bits represent an integer part, and lower three bits represent an decimal fraction part.

The memory controller E operates at the operation frequency of 64MHz in consideration of an operation frequency of the common memory F. The information selection unit C operates at the operation frequency of 100MHz. The difference between those operation frequencies generates the following discrepancy. When the information selection unit C processes one word in one clock, the common memory F requires 1.5625 (100/64) clocks. Then, 1.5625 clocks are set in the selection interval setting unit A as the selection interval. As another possible configuration, values of the operation frequencies of the bus masters and the common memory F may be stored in the selection interval setting unit A to thereby calculate the selection interval.

Next is described the case of increasing a transfer speed by transferring consecutive data.

Described below is the case of consecutively processing (as an example, four information) a predetermined number of words (as an example, four words).

Time required for the common memory F to process four words is represented by 6.25 clocks in terms of a clock number in the information selection unit C. The processing of four information each comprised of four words thus requires 25 clocks.

Then, the value of "00110.010" represented by the fixed decimal point of eight bits as the binary number of "6.25" is stored in the selection interval setting unit A. "6" in the integer part is "00110" in the upper five bits. "0.25" in the decimal fraction part is "010" in the lower three bits. "00110010", corresponds to "32" in the hexadecimal numeral in terms of handling the integer and decimal fraction parts as a unit.

In Step S11, the timing adjustment unit B adds one to the clock counter b, that is, increments a count value CNT, in response to the detection of a rising edge of a clock. The addition of one clock corresponds to the addition of 08 in the hexadecimal numeral, in which the integer and decimal fraction parts are handled as a unit.

Next, in Step S12, it is judged whether or not the count value CNT of the clock counter b is equal to or larger than a previously-set selection interval TSO. At the timing of N1 in Fig. 4A, the count value CNT is 08 (H) (one clock), and the selection interval TSO is 32 (H) ⟨6.25 clocks⟩, resulting in a denial for the judgment on TSO≦CNTb. Then, further in Step S13, the selection signal is reset (no output of selection signal), and the processing is terminated.

The Step S11 restarts to repeat the foregoing operation. During that time, the count value CNT increases by 08 (H) (one clock). At the timing of N7, the count value CNT increases to 38 (H) (seven clocks) to thereby become larger than the selection interval TSO, 32 (H) ⟨6.25 clocks⟩ . The judgment in the Step S12 is here affirmed, followed by Step S14. In the Step S14, the selection interval TSO is subtracted from the count value CNT. In the present case, 32 (H) ⟨6.25 clocks⟩ are subtracted from 38 (H) (seven clocks), the result of which is 06 (H) (0.75 clocks). The difference corresponds to an additional occupancy of the buses. At the time of N7, 06 (H) are shown. 06 (H) ⟨0.75 clocks⟩ obtained in the subtraction is utilized in a selection interval that follows.

Next, in Step S15, the selection signal is set and outputted. The information selection unit C arbitrates conflicts among the buses based on the selection signal.

The difference, 06 (H) (0.75 clocks), is referenced in a second selection period P2.

There are two methods of referencing the difference, which is obtained in the preceding period, in the next selection interval, and they are described referring to Fig. 4B. The description in Fig. 4B is based on the decimal number (per clock) .

In a first method, 6.25 clocks ⟨32 (H)⟩, which is an initial set value TSO in the selection interval setting unit A, is set as a comparison reference value Tref at an initial stage of a selection period P1 (Tref = 6.25).

The count value CNT in the first selection period P1 starts at 0 and increases to 1, 2, 3, 4, 5, and 6. At the time of the count value CNT = seven clocks, the count value CNT exceeds the comparison reference value Tref = 6.25. Then, a difference $\Delta T$ is calculated, which, in the present case, results in,

$$\Delta T = CNTb - Tref = 7 - 6.25 = 0.75$$

Anew comparison reference value Tref is further generated, which is obtained by subtracting the difference $\Delta T$ from the initial set value TSO.

$$Tref = TSO - \Delta T = 6.25 - 0.75 = 5.5$$

Therefore, 5.5 clocks ⟨28 (H)⟩ are the comparison reference value in the second selection period P2.

The count value CNT is cleared to zero in shifting to the second selection period P2. The count value CNT of the second selection period P2 starts at 0, and increases to 1, 2, 3, 4, and 5. At the time of the count value CNT = six clocks, the count value CNT exceeds the comparison reference value Tref = 5.5. Then, the difference $\Delta T$ is calculated, which, in the present case, results in,

$$\Delta T = CNTb - Tref = 6 - 5.5 = 0.5$$

A new comparison reference value Tref is further generated.

$$Tref = TSO - \Delta T = 6.25 - 0.5 = 5.75$$

In a third selection period P3, 5.75 clocks ⟨28 (H)⟩ are the comparison reference value Tref. At the time of N13, the selection signal is outputted.

The count value CNT is cleared to zero in shifting to the second selection period P3. The count value CNT of the third selection period P3 starts at 0, and increases to 1, 2, 3, 4, and 5. At the time of the count value CNT = six clocks, the count value CNT exceeds the comparison reference value Tref = 5.75. Then, the difference $\Delta T$ is calculated, which, in the present case, results in,

$$\Delta T = CNTb - Tref = 6 - 5.75 = 0.25$$

A new comparison reference value Tref is further generated.

$$\texttt{Tref = TSO - }\Delta\texttt{T = 6.25 - 0.25 = 6}$$

At the time of N19, the selection signal is outputted.

In a fourth selection period P4, six clocks ⟨30 (H)⟩ are the comparison reference value Tref. The comparison reference value Tref, six clocks ⟨30 (H)⟩, has no fraction. At the time of N25, the selection signal is outputted.

The time required by the information selection unit C for the selection, is seven clocks from the N1 through N7, six clocks from the N8 through N13, six clocks from the N14 through N19, and six clocks from the N20 through N25. The summed clock numbers are,

$$\texttt{T1 + T2 + T3 + T4 = 7 + 6 + 6 + 6 = 25 (clocks)}$$

The summed time required by the common memory F is,

$$\texttt{6.25 } \times \texttt{ 4 = 25 (clocks)}$$

They are equal to each other. More specifically, the summed selection time with respect to the plurality of bus masters in the selection periods and the summed processing time of the common memory F processing the information from the plurality of bus masters are equal to each other. The mean value in the selection periods is 6.25 clocks.

Next, a second method is described. The second method does not employ the previous subtraction of the difference from the value of the selection interval setting unit A.

In the second selection period P2, the count value CNT is incremented per one clock using the difference of 0.75 clocks as a new initial value. The count value CNT increases to 1.75, 2.75 ... , 5.75 and 6.75 to be larger than the comparison reference value Tref = selection interval TSO of 6.25 clocks, and the selection signal is outputted.

Again, 0.5 clock, which is the difference between the count value CNT of 6.75 clocks and the selection interval TSO of 6.25 clocks is calculated.

In a third period P3, the count value CNT is incremented per one clock using the difference of 0.5 clock as a new initial value. The count value CNT increases to 1.5, 2.5 ..., 5.5 and 6.5 to be larger than the comparison reference value Tref = selection interval TSO of 6.25 clocks, and the selection signal is outputted.

Again, 0.25 clock, which is the difference between the count value CNT of 6.5 clocks and the selection interval TSO of 6.25 clocks is calculated.

In a fourth period P4, the count value CNT is incremented per one clock using the difference of 0.25 clock as a new initial value. The count value CNT increases to 1.25, 2.25 ... , 5.25 and 6.25 to be equal to the comparison reference value Tref = selection interval TSO of 6.25 clocks, and the selection signal is outputted.

More specifically, the summed selection time with respect to the plurality of bus masters in the selection periods and the summed processing time of the common memory F processing the information from the plurality of bus masters are equal to each other.

In the second method, instead of clearing the count value CNT to zero, the difference between the count value CNT and the previously set value is added to the next value of the clock counter. More specifically, itbecomes unnecessary to subtract the difference generated in the previous selection period from the value of the selection interval setting unit in the next selection period. Therefore, the second method exerts more efficiency than the first method.

As described, the summed time required for selecting the information from the plurality of bus masters and the summed time required for processing the information from the plurality of bus masters in the common memory F can be substantially equal to each other. In that manner, the plurality of bus masters and the common memory F can be advantageously utilized, and the information volume stored in the buffer can be controlled.

Further, the time for selecting the information in each selection period and the processing time of the common memory are substantially equal to each other so that the bus masters and the common memory F can be efficiently operated in each selection period as well. Also, the information volume stored in the buffer can be reduced, thereby assuring the storage of any necessary information in the buffer.

The case of consecutively processing the information of the fixed length, as in the SDRAM, was described in the present embodiment. The present embodiment, however, is not limited to such a case, and can also be applied to the processing of information of a variable length.

In order to realize the processing of the information of the variable length, the selection interval TSO is readjusted based on the information volume to be processed in the next selection period, the operation frequency of the bus master next to be used, and the like, in the selection interval setting unit A.

Next, the present invention is compared to a conventional technology.

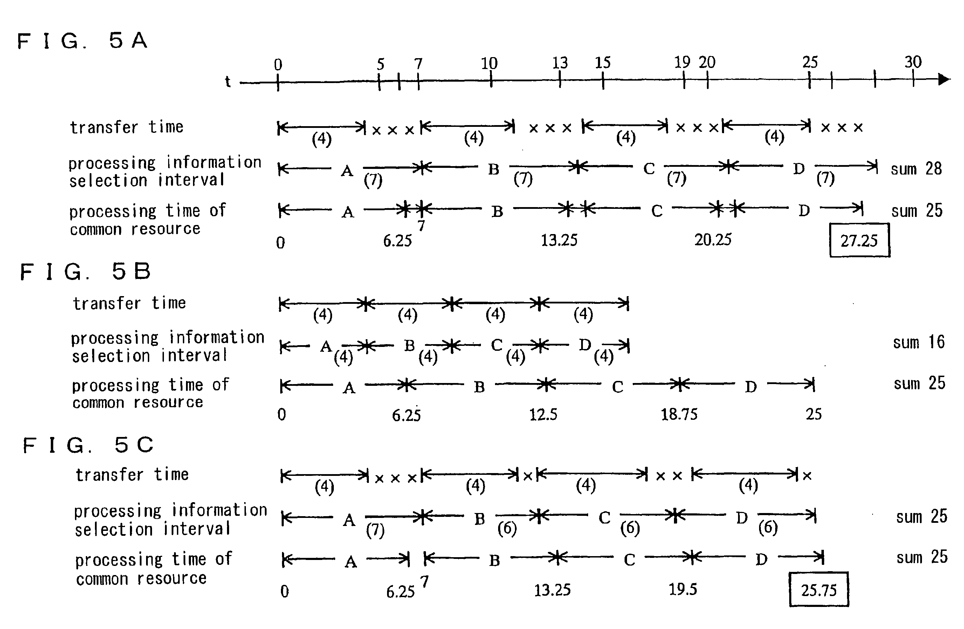

Figs. 5A and 5B illustrate the conventional technology, while Fig. 5C illustrates a method according to the present invention.

Time required for processing information including four words transferred from the bus masters in the common memory F is 6.25 clocks.

In the case of Fig. 5A, time required for the arbitration with respect to the bus masters by the information selection unit C is necessarily set to be 6.25 clocks or more. The intervals of at least seven clocks are required. The bus masters cannot transfer the information prior to the termination of the seven clocks. Further, the common memory F cannot process any information until information is transferred after the termination of 6.25 clocks. As a result, the summed selection time in the selection periods is 28 clocks, and the summed processing time of the memory F is 27.25 clocks.

In the case of Fig. 5B, a buffer, which absorbs the differences between the operation speeds of the bus masters and the common memory F, is provided to thereby enable consecutive operations, wherein the summed selection time in the selection periods is 16 clocks, and the summed processing time of the common memory F is 25 clocks.

In contrast, according to the present invention, seven clocks in the first selection period P1, six clocks in the second selection period P2, six clocks in the third selection period P3, and six clocks in the fourth selection period P4, as described. The sum of the required time in the information selection unit C is 25 clocks. The sum of the processing time in the common memory F is 25 clocks. The addition of 0.75 clock, which is the difference in shifting from the first selection period P1 to the second selection period P2, thereto actually results in 25.75 clocks.

As is clear from the foregoing description, according to the present invention, the bus masters and the common memory F can be advantageously utilized. Further, because the information volume stored in the buffer can be reduced, the failure to store the necessary information can be avoided.

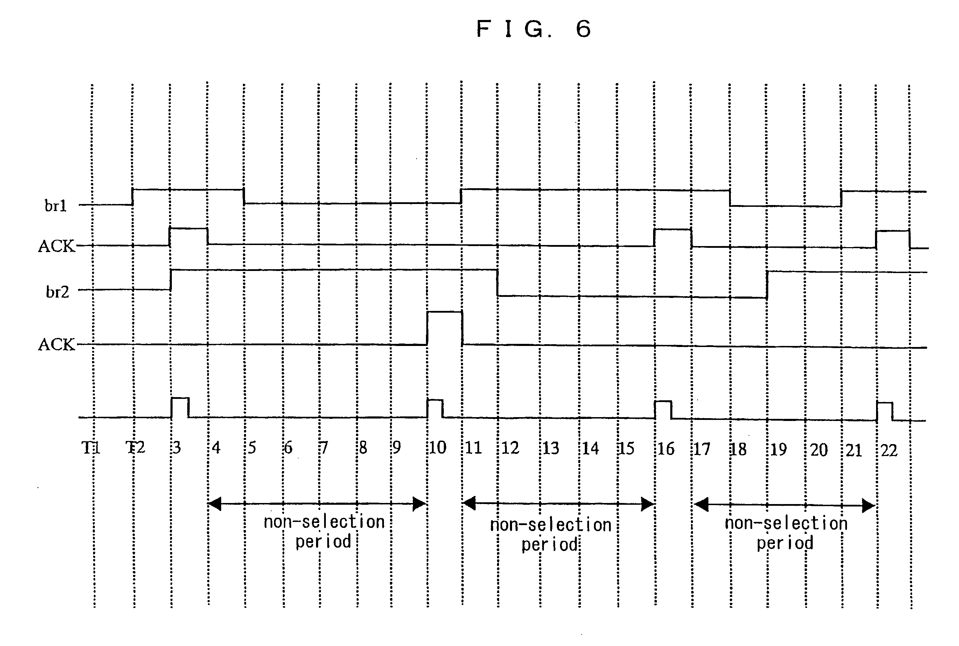

Next, a relationship between the plurality of bus masters and the information selection in the information selection unit C is described referring to Fig. 6. In the description that follows, it is assumed that the bus master M1 is provided with a first place in the priority order.

Prior to T2, information to be processed in the common memory F is outputted to the information selection unit C from the bus master M1. At that point, there is no information from any other bus master.

Next, at the T2, the information selection unit C confirms the information from the bus master M1.

Meanwhile, the bus master M2 outputs information between the T2 and T3.

Next, at the T3, the information selection unit C selects from the bus masters M1 and M2, and sends the selection signal to the bus master M1 based on the priority order.

Thus, the information from the bus master M1 is selected in the first selection period P1. Because of the limited processable volume of information in the first selection period, the selection signal cannot be outputted to the bus master M2. Therefore, during the first selection period P1, the information selection unit C sets a non-selection period, when the selection signal is not outputted to any bus master, between the T4 and T10. The information selection unit C can thereby select only the information from the bus master M1.

EMBODIMENT 2

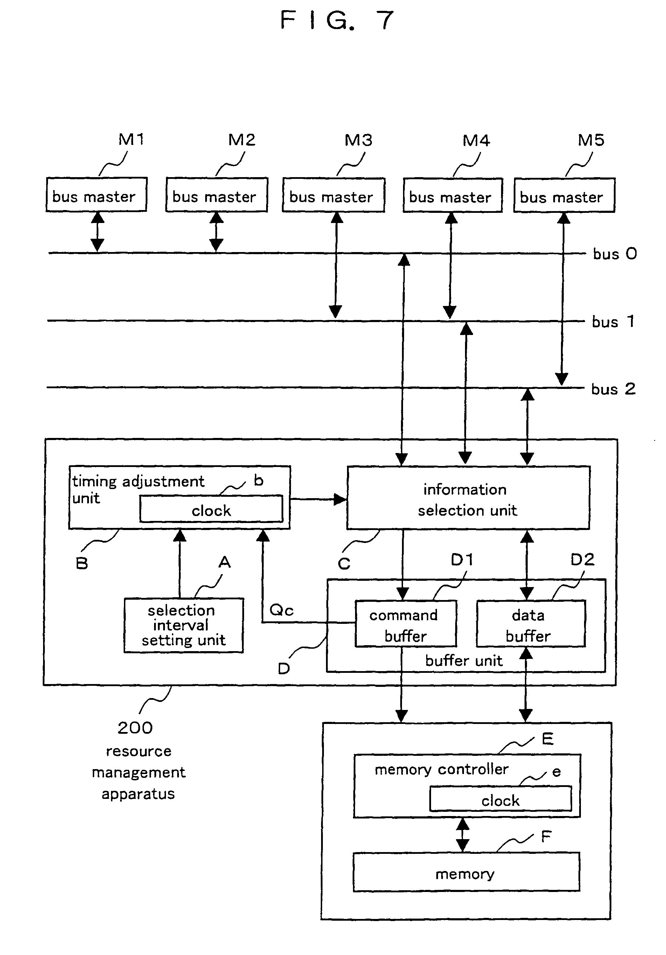

Fig. 7 illustrates a configuration of a system including a resource management apparatus 200 according to an embodiment 2 of the present invention. In the system, as a further arrangement provided for the configuration according to the embodiment 1, a command buffer D1 and a timing adjustment unit B are connected, wherein a control signal from the commandbuffer D1 is used to control the generation of a selection signal in the timing adjustment unit B. The rest of the configuration is the same as in the configuration of Fig. 1. Accordingly, the same components, which are attached with the same reference symbols, are not described in the present embodiment.

The command buffer D1 has a FIFO (First In, First Out) structure, which is capable of storing a plurality of information from the selected bus masters selected by the information selection unit C. In other words, before the processing of the selected information is completed, information from another bus master can be stored in the command buffer D1.

The timing adjustment unit B is provided with a predetermined threshold value Qth relating to a stored information volume Qc of the command buffer D1 to thereby adjust the selection interval TSO based on the threshold value Qth. Accordingly, the plurality of bus masters and the common memory F can be thereby efficiently operated, and further, a suitable number of information volumes can be stored in the commandbuffer D1. The threshold value Qth can be set in a component other than the timing adjustment unit B.

The timing adjustment unit B has a first selection interval TSOa and a second selection interval TSOb. The second selection interval TSOb is set to be longer than the first selection interval TSOa.

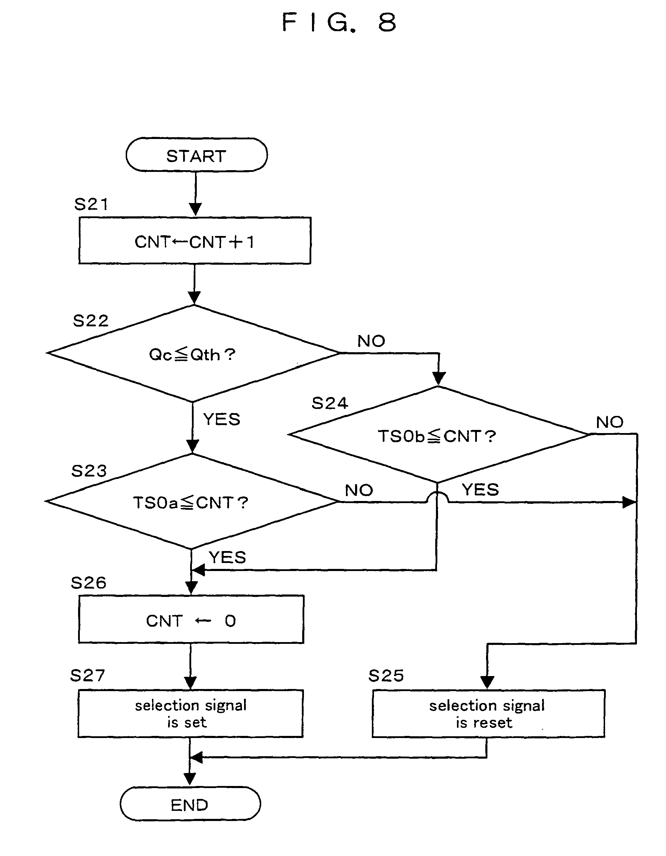

Next, the operation of the resource management apparatus according to the present embodiment configured as such is described referring to the flow chart of Fig. 8.

In Step S21, when the timing adjustment unit B detects a rising edge of a clock, the count value CNT is incremented.

Next, in Step S22, the timing adjustment unit B compares the stored information volume Qc of the command buffer D1 and the threshold value Qth to each other.

When the stored information volume Qc is equal to or below the threshold value Qth, the operation proceeds to Step S23. When the stored information volume Qc exceeds the threshold value Qth, the operation proceeds to Step S24.

In the Step S23, the current count value CNT and the first selection interval TSOa are compared to each other as in the embodiment 1. As a result, when the count value CNT is smaller than the first selection interval TSOa, the operation proceeds to Step S25, thereby terminating the processing without outputting the selection signal. When the count value CNT is equal to or larger than the first selection interval TSOa, the operation proceeds to Step S26, in which the count value CNT is cleared to zero, followed by the output of the selection signal in step S27.

On the contrary, when the stored information volume Qc exceeds the threshold value Qth in the Step S22, the operation proceeds to the Step S24. In the Step S24, the current count value CNT and the second selection interval TSOb are compared to each other. As a result, when the count value CNT is smaller than the second selection interval TSOb, the operation proceeds to the Step S25, thereby terminating the processing without outputting the selection signal. When the count value CNT is equal to or larger than the second selection interval TSOb, the operation proceeds to the Step S26, in which the count value CNT is cleared to zero, followed by the output of the selection signal in the Step S27.

As described, when the stored information volume Qc of the command buffer D1 is small, the shorter first selection interval TSOa is referenced for the comparison, the common memory F can be more efficiently used.

On the contrary, when the stored information volume Qc is large, the longer second selection interval TSOb is referenced for the comparison. More specifically, the selection period is arranged to be longer to thereby allow some space in dealing with the relatively large stored information volume Qc. The arrangement is made so that the information from the bus master of the highest priority can be surely stored in the command buffer D1 at an optional time.

As described, according to the present embodiment, the selection interval TSO is thus adjusted to thereby efficiently operate the plurality of bus masters and the common memory F. Besides, a suitable volume of information can be stored in the command buffer D1.

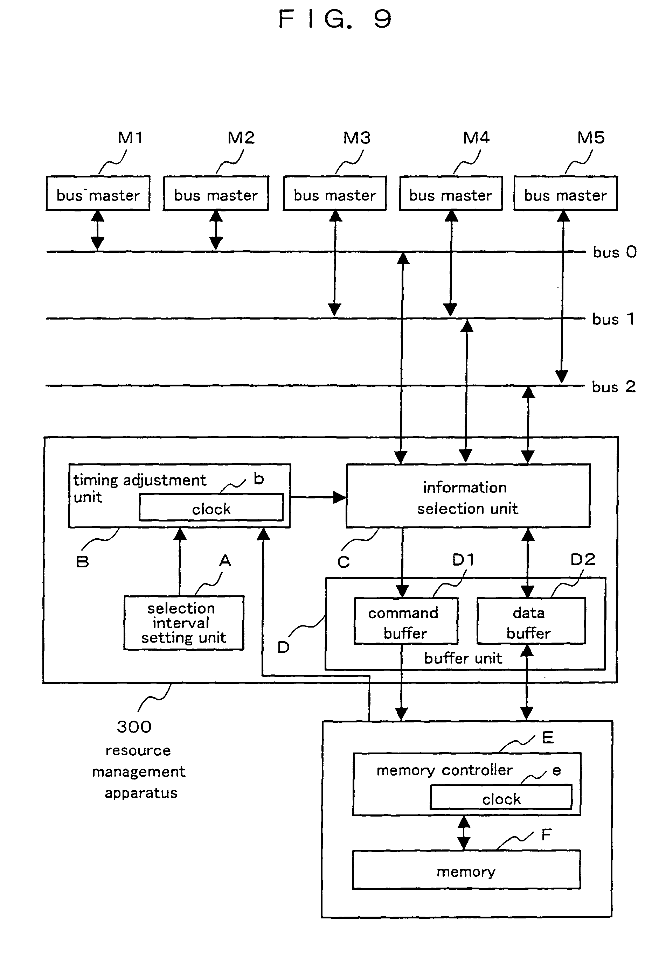

Fig. 9 shows a resource management apparatus 300 according to a modification of the present embodiment capable of changing the selection interval TSO in the selection interval setting unit A by means of a control signal from the memory controller E. As a possible option for the control signal, a signal, which represents the generation of additional clocks due to precharge , refresh, or the like, in the memory controller E, can be mentioned. The rest of the configuration is the same as in the configuration of Fig. 1. Accordingly, the same components, which are attached with the same reference symbols, are not described in the present embodiment.

The timing adjustment unit B, in response to the input of the control signal thereto, sets the selection interval TSO to be relatively longer. The plurality of bus masters and the common memory F can be thereby efficiently used, besides, a suitable volume information can be stored in the command buffer D1.

For example, in the case of using the common memory F, in which an access time fluctuates as in the SDRAM, the selection interval TSO is adjusted by means of the information volume stored in the commandbuffer D1 or the information of the accessed memory controller E to thereby store a suitable volume of information in the command buffer D1.

The command buffer D1 is prevented from undergoing an overflow and is free of any control of the stored information volume stored therein. In brief, the memory can be more efficiently used while guaranteeing a band width with respect to the bus masters. As a possible configuration, the selection of any information other than current information is prohibited when the stored information volume Qc of the buffer is larger than the threshold value Qth, and further, the information from the bus master of the highest priority is not transferred during a certain selection period.

EMBODIMENT 3

An embodiment 3 of the present invention is offered in consideration of a relationship between the buses/ bus masters and priority orders. The information selection unit C is configured to select information based on the priority orders of the buses. The before-mentioned drawing is incorporated in the present embodiment as a configuration diagram thereof.

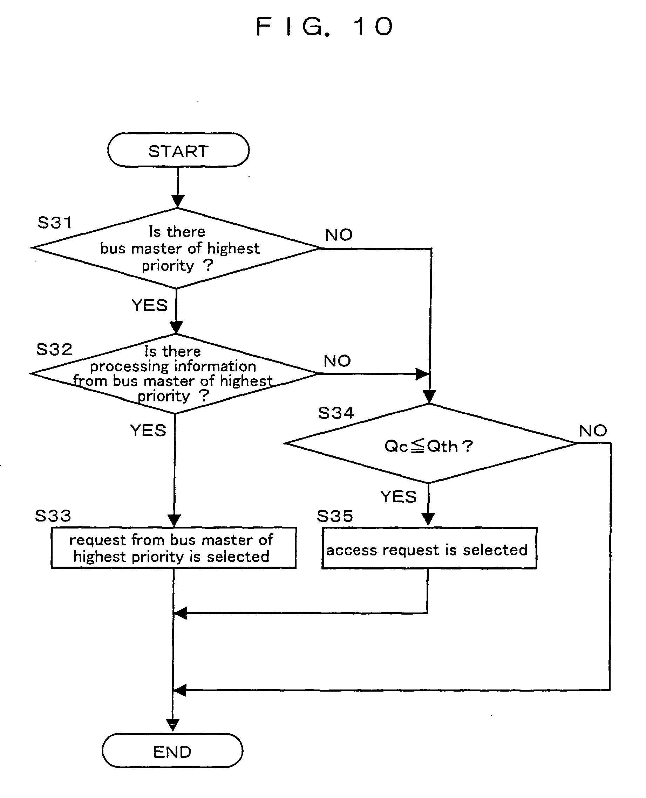

The operation according to the present embodiment is described referring to the flow chart of Fig. 10.

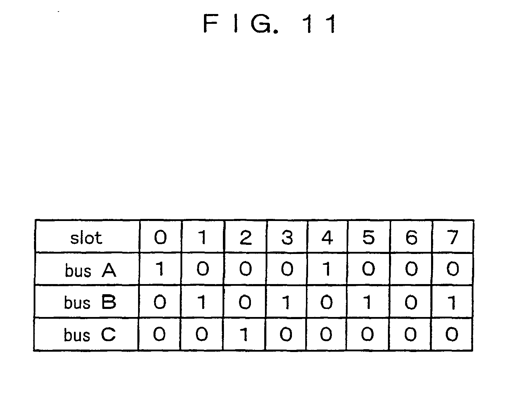

In Step S31, the information selection unit C confirms selection information representing the priority orders of the respective buses shown in Fig. 11 to thereby judge whether or not a bus master of the highest priority is designated.

The judgment is made per bus and per slot. For example, it is judged, in Slot 0, that the bus master of the highest priority is present with respect to a bus A designating "1", while it is judged that there is no bus master of the highest priority in Slot 6 because all of the buses therein designate "0".

When the bus master of the highest priority is designated, the operation proceeds to Step S32 , in which it is judged whether or not the highest-priority bus master outputs information. When it is judged that the highest-priority bus master outputs the information, the operation proceeds to Step S33, in which the information is selected and stored in the buffer.

When it is judged that the highest-priority bus master is not designated in the Step S31, and it is judged that the highest-priority bus master does not output the information in the Step S32, the operation proceeds to Step S34. In the Step S34, the stored information volume Qc of the command buffer D1 and the predetermined threshold value Qth are compared to each other, and the processing is terminated without the information selection when the stored information volume Qc is larger than the threshold value Qth. On the contrary, when the stored information value Qc is equal to or below the threshold value Qth, the information selection is implemented in accordance with the fixed priority orders to thereby store the selected information in the buffer unit D.

As described, the information selection unit C prohibits the storage of the information in the buffer unit D when a large volume of information is already stored in the buffer unit D to prevent the buffer unit D from undergoing an overflow. Further, the information is selected during the selection period in which the highest-priority bus master is set, thereby guaranteeing an access band width with respect to the memory.

As described, according to the present embodiment, the information is selected or not selected depending on the status of the buffer unit D, so that the command buffer D is prevented from undergoing the overflow when the comparison reference value for the information selection even temporarily exceeds a command processing interval of the memory controller E. In that manner, the selection intervals can be set to be smaller than in the conventional technology, and accordingly, the memory can be more efficiently used and the system performance can be improved even in dealing with the case where the command processing intervals of the memory controller E are reduced.

According to the present embodiment, when a large volume of information is stored in the command buffer D1, there is no selection of the command at the arbitration timing including no highest-priority bus. Alternatively, a transfer size of the command may be restricted to deal with the different volumes of the stored information.

Referring to the described priority orders of the bus masters, for example, in the case where the bus masters are wired according to the daisy chain method, the priority orders may be determined depending on connection paths with respect to the information selection unit C. As an alternative, as shown in Fig. 11, the highest-priority bus or bus master may be changed per selection period to thereby adjust the time lengths, when the respective buses and bus masters exert the bus-use right, to be substantially uniform.

The stored information volume Qc of the buffer unit D and the threshold value Qth may be compared to each other when the information is stored in the buffer unit D, or in every predetermined period.

EMBODIMENT 4

An embodiment 4 of the present invention relates to a resource management apparatus having a fixed upper limit (maximum transfer information volume) for the volume of the information transferred from the bus masters.

When the volume of the information from the highest-priority bus master is equal to or below the maximum transfer information volume, information from another bus master of a high priority other than the highest-priority bus master, whose summed information volume is equal to or less than the maximum transfer information volume, is selected, in order to assure the maximum transfer information volume and thereby achieve an efficient processing.

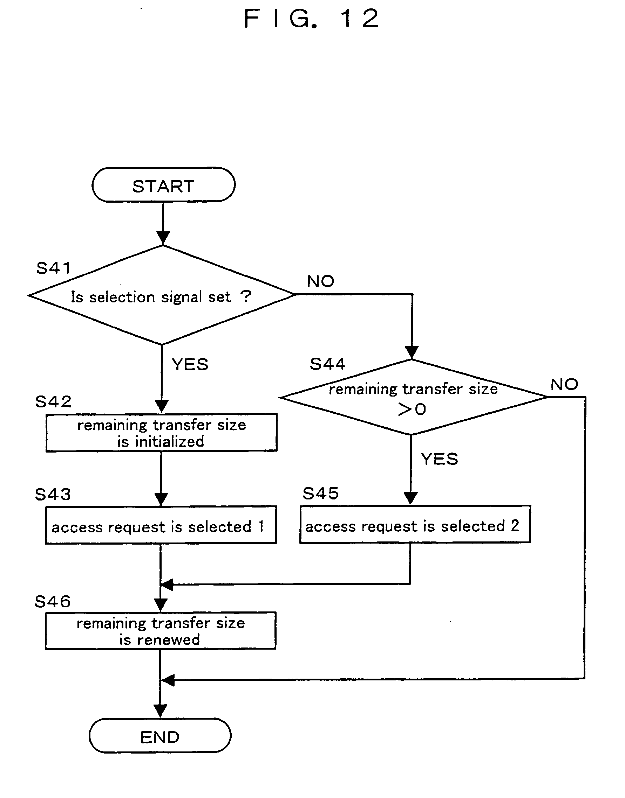

Fig. 12 is a flow chart describing the operation of the information selection unit C per clock. A remaining transfer size is stored in a register in the information selection unit C. The remaining transfer size is zero when initially set.

In Step S41, the information selection unit C, when detecting the rising edge of the clock, judges whether or not the selection signal is set.

When the selection signal is set, the operation proceeds to Step S42 , in which the remaining transfer size is initialized, for example, it is set at a maximum number of transfer words per selection period (for example, four words).

Next, in Step S43, information selected by the information selection unit C during a current selection period is stored in the command buffer D and the data buffer D2. At that time, a transfer size of the selected information, when exceeding the maximum number of transfer words, is divided into a plurality of information each including the maximum number of transfer words to be processed.

In contrast, when it is judged that the selection signal is reset in the Step S41, the operation proceeds to Step S44, in which it is judged whether or not the remaining transfer size is larger than zero, and when zero, the processing during the current selection period is terminated.

On the contrary, when the remaining transfer size is larger than zero, the operation proceeds to Step S45. In the Step S45, information of the next lower high priority is selected in accordance with the priority order during the current selection period, and stored in the command buffer D1 and the data buffer D2, except for any information of a transfer size larger than the remaining transfer size, which is excluded from the selection object.

When the information is stored, the operation proceeds to Step S46, in which the remaining transfer size is renewed. More specifically, the transfer size of the information stored in the command buffer D1 and the data buffer D2 is subtracted from the remaining transfer size. When there is no selected information, the remaining transfer size is set at zero.

As described, when the information selection unit C receives information of a transfer size smaller than the maximum number of transfer words per selection period, a plurality of information can be accepted during the same selection period. The sum of the transfer sizes of the plurality of information accepted during the same selection period does not exceed the maximum number of transfer words per selection period. Because the selection signal is outputted to the bus masters emitting the consecutive information during the selection period when the highest-priority bus master is set, the access band width with respect to the memory is guaranteed.

As described, according to the present embodiment, when the information of the small transfer size is received, the plurality of information are accepted during the same selection period. In such a manner, the band width of the memory with respect to the consecutively-accessing bus masters is guaranteed, so that the memory can be more efficiently used and, by extension, the entire system can be improved in its performance.

EMBODIMENT 5

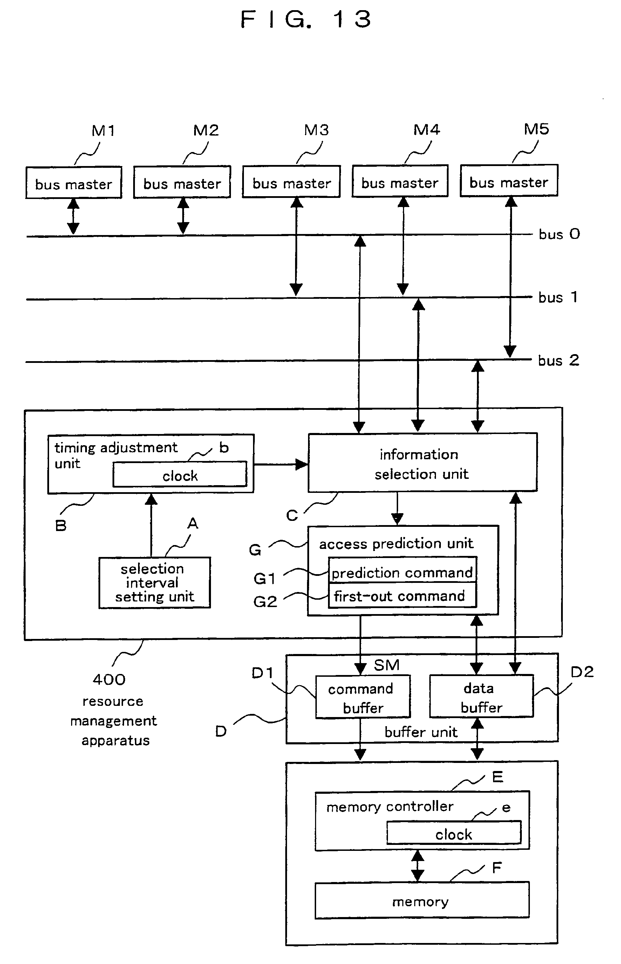

In a resource management apparatus 400 shown in Fig. 13, an access prediction unit G is connected between the information selection unit C and the buffer unit D. The access prediction unit G comprises a prediction command G1 and a first-out command G2. The rest of the configuration is the same as in the configuration of Fig. 1. Accordingly, the same components, which are attached with the same reference symbols, are not described in the present embodiment.

The access prediction unit G predicts a command (prediction command) based on reading-related information so far transferred from the bus masters M1 - M5. The prediction command G1 stores the prediction command. The first-out command G2 stores information already stored in the buffer unit D (first-out command) through the prediction. The information selection unit C transfers the selected information to the access prediction unit G. In an embodiment 5 of the present invention, the information selection unit C transmits a prediction-request command to the access prediction unit G when none of the bus masters M1 - M5 issues information.

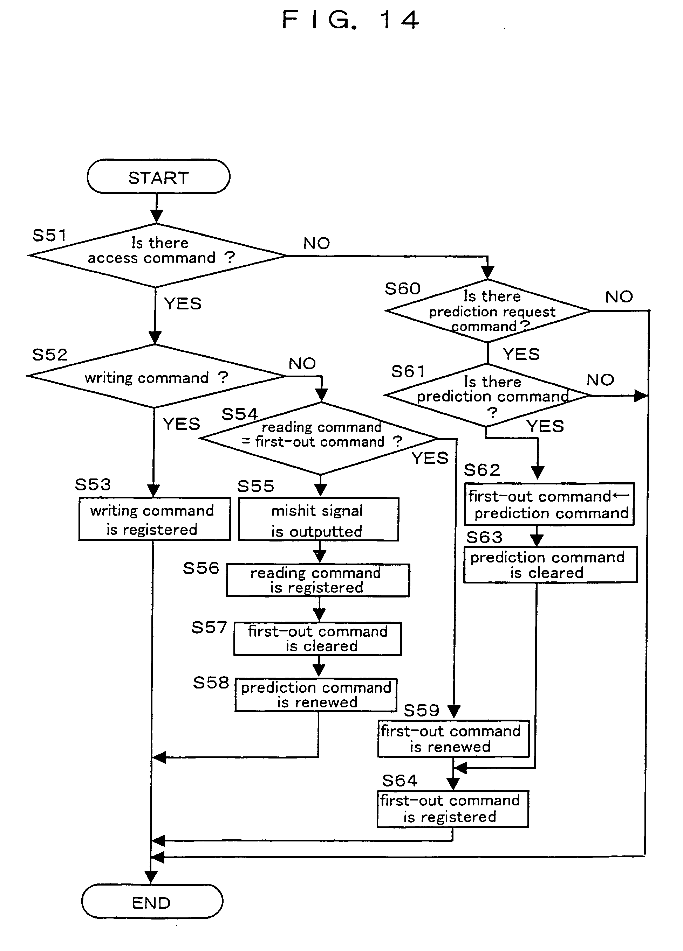

The operation of the access prediction unit G is described referring to the flow chart shown in Fig. 14, which describes the operation of the access prediction unit G per cycle. The prediction command G1 and the first-out command G2 are both cleared at the time of initialization.

In Step S51, the access prediction unit G judges whether or not the information (access command) is transferred to the information selection unit C. When it is judged that the information is transferred, the operation proceeds to Step S52 , in which it is judged whether or not the command is a writing command or a reading command. When the command is the writing command, the operation proceeds to Step S53, in which the information is stored in the command buffer D1 without change. On the contrary, when the command is the reading command, the operation proceeds to Step S54, in which it is judged whether or not the reading command is identical to the command in the first-out command G2 (first-out command).

When they are not identical, the operation proceeds to Step S55, in which a mishit signal SM is outputted to the buffer unit D. Next, the reading command is stored in the command buffer D1 in Step S56. Then, the first-out command G2 is cleared in Step S57, and the prediction command G1 is renewed in Step S58. At that time, using an address read out by means of the reading command stored in the command buffer D1 as a reference, the prediction command G1 is renewed to a reading command starting at an address that follows the reference address. The renewed command has the same access size. An efficient prediction is thereby achieved.

When it is judged that the reading command is identical to the first-out command in the Step S54, the operation proceeds to Step S59, in which the fist-out command G2 is renewed to a command starting at the next address. In Step S64 , the renewed first-out command is stored in the command buffer D1. In the foregoing manner, when consecutive addresses are designated, a valid first-out command can be stored in the command buffer D1.

Meanwhile, the information from all of the bus masters is not yet transferred in the Step S51, the operation proceeds to Step S60, in which it is judged whether or not the prediction-request command is present, and the processing is terminated in the absence of the prediction-request command.

In the presence of the prediction-request command, the operationproceeds toStep S61, inwhichitis judgednextwhether or not the prediction command is present, and the processing is terminated in the absence of the prediction command. When the valid reading command is set, the operation proceeds to Step S62, in which the prediction command of the prediction command G1 is stored in the first-out command G2. In Step S63, the prediction command G1 is cleared. In the Step S64, the first-out command of the first-out command G2 is stored in the command buffer D1.

As described, the information selection unit C can prefetch desired information from the common memory F only in the case where all of the bus masters are not outputting the command requesting the bus-use right.

In the foregoing manner, when any of the bus masters requests to use the common memory F, the common memory F can be surely processed by the bus master because of the executed prefetch. As a result, the system can better perform.

The desired information referred to earlier is the commands or data frequently used by the plurality of bus masters.

In the present embodiment, the latest command is predicted. However, there are other possible methods, wherein only a particular bus master is predicted depending on characteristics of the bus masters, every bus master is predicted to thereby issue the prediction information to the highest-priority bus master when there is no command from any of the bus masters, and the like.

In the present embodiment, the prediction command of one information is issued, however, a plurality of information can be predicted so that the prediction commands are issued to thereby read the data.

The method of issuing the prediction command is not limited to the method according to the present embodiment, and may employ a method, where the prediction command is issued when the number of the commands stored in the buffer unit D decreases.

In the case in which data is written in an address of first-in data prior to the reading thereof, the data is overwritten or abandoned for the purpose of the identity of the data.

EMBODIMENT 6

In an embodiment 6 of the present invention, a bus arbitration unit H is provided. The bus arbitration unit H arbitrates requests from a plurality of bus masters M1, M2, and M3.

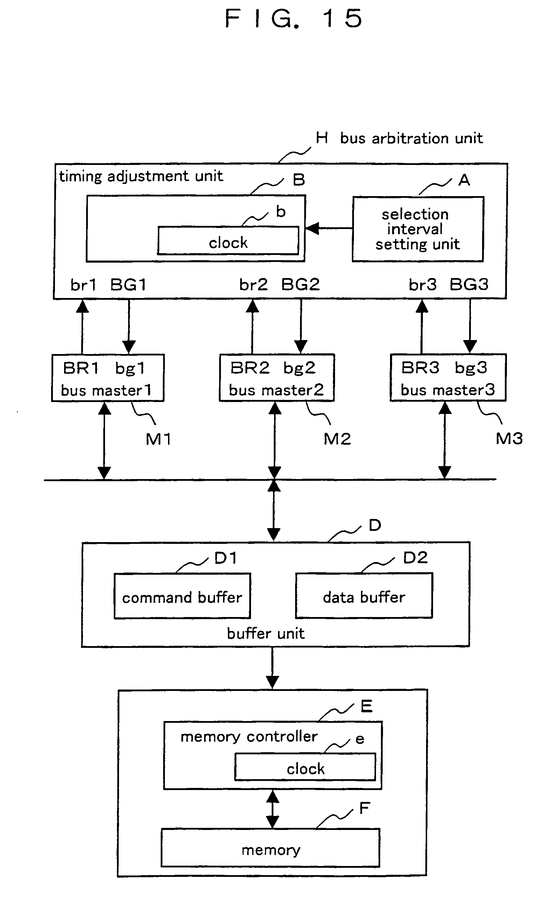

As shown in Fig. 15, the bus masters M1, M2, and M3 respectively comprises bus request output portions BR1, BR2, and BR3 for outputting a request for the bus-use right, and permission signal input portions Bg1, Bg2, and Bg3. The bus request output portions BR1, BR2, and BR3 are respectively connected to bus request input portions Br1, Br2, and Br3 separately functioning in a bus arbitration unit H.

The bus arbitration unit H comprises permission signal output portions BG1, BG2, and BG3 for outputting a permission signal serving to grant the bus-use right, and bus request input portions Br1, Br2, and Br3. The permission signal output portions BG1, BG2, and BG3 are respectively connected to the permission signal input portions Bg1, Bg2, and Bg3 of the respective bus masters.

According to the configuration, when requests from the plurality of bus masters M1, M2, andM3 conflict with one another, the bus arbitration unit H outputs the permission signal to one of the bus masters, so that only the one bus master can exclusively use a bus.

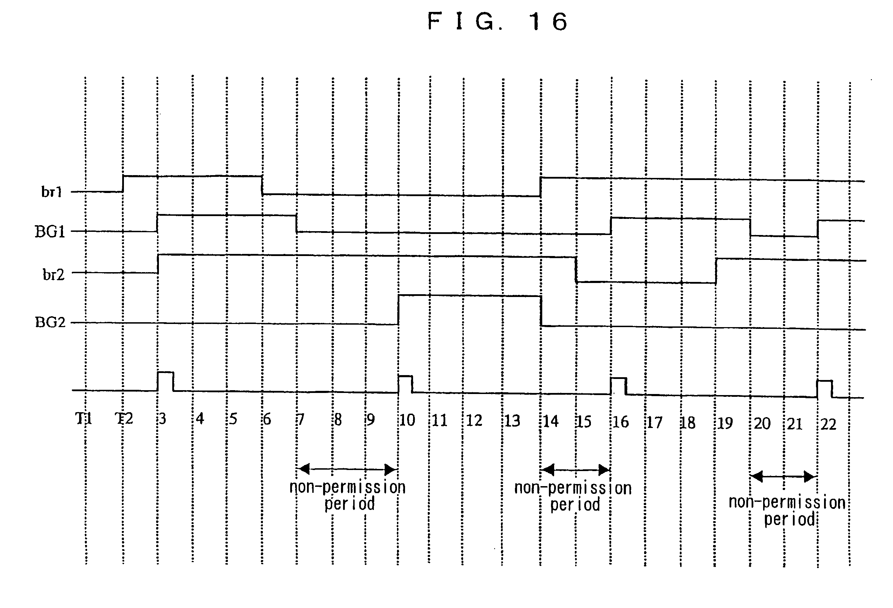

Next, the operation according to the present embodiment is described. Fig. 16 illustrates the case where the bus arbitration unit H arbitrates the requests from the plurality of bus masters M1, M2, and M3. In the case, it is assumed that the priority order of the bus master M1 is higher than the that of the bus master M2.

First, prior to T2, the request relating to the use of the bus is outputted from the bus master M1 to the bus arbitration unit H, while the request relating to the use of the bus from the bus master M2 is not yet inputted to the bus arbitration unit H. Next, at the T2, the bus arbitration unit H confirms the request from the bus master M1. Between the T2 and T3, the bus master M2 outputs the request.

Next, at the T3, the bus arbitration unit H arbitrates the requests from the bus masters M1 and M2, and outputs the permission signal to the bus master M1 based on the priority order. The bus master M1, in receipt of the permission signal, is able to use the bus, and therefore outputs a command via the bus. At the T3, the bus arbitration unit H confirms the input of the bus request from the bus master M2, however does not immediately output the permission signal to the bus master M2 because the permission signal is already outputted to the bus master M1 granting the bus master M1 the bus-use right during a first bus-occupancy period.

Thereafter, the bus master M1 voluntarily dismisses its request when it is judged that the use of the bus is not necessary anymore. A signal conveying the dismissal of the request is inputted to the bus arbitration unit H at T6.

Next, at T7, the bus arbitration unit H dismisses the permission signal for the bus master M1. However, the bus master arbitration unit H sets a non-permission period, during which the permission signal is not outputted to any bus master, between the T7 and T10, so that the bus-use right is not exclusively exerted by any bus master during the firstbus-occupancyperiod, from the T3 through T10. Because the permission signal is not outputted to any bus master other than the first bus master M1 during the first bus-occupancy period, from the T3 through T10, the bus master M1 can eventually exclusively use the bus.

Meanwhile, the bus master M2 continues to output the request from the T2 onwards. At the T10, when the first bus-occupancy period is over, the bus arbitration unit H outputs the permission signal to the bus master M2 to thereby transfer the bus-use right from the bus master M1 to the bus master M2. Thereafter, the bus master M2 can output the command via the bus from the T10 through T14, during which it is subject to the permission signal.

The bus master M1, after the dismissal of the request, outputs the request again by the T14. As described, the bus master M1 has the priority higher than that of the bus master M2 in exerting the bus-use right. Therefore, when the request is outputted from the bus master M1, the bus arbitration unit H dismisses the permission signal with respect to the bus master M2. Thereby, in a third bus-occupancy period, from T16 through T22, the bus master M1 can exclusively use the bus.

At the T14, the bus arbitration unit H dismisses the permission signal with respect to the bus master M2. After the permission signal is dismissed at the T14, the non-permission period, during which the permission signal is not outputted to any bus master, is provided between the T14 and T16 as in the first bus-occupancy period described earlier. Thus, the bus master M2 can eventually exclusively use the bus because the permission signal is not outputted to any bus master other than the second bus master M2 in a second bus-occupancy period, from the T10 through T16.

Next, at the T16, the bus master M1, in receipt of the permission signal outputted from the bus arbitration unit H, starts to exclusively use the bus. After that, the bus master M1 is able to transfer the command via the bus from the T16 through T20, during which the exclusive use of the bus is permitted, as in the described first and second bus-occupancy periods. Because the bus arbitration unit H does not output the permission signal to any bus master other than the bus master M1 in a third bus-occupancy period from the T16 through T22, the bus master M1 can eventually exclusively use the bus during the period.

Further, the bus master M1 continuously outputs the request for the bus from the T14 onwards, and the bus master M2 continuously outputs the request for the bus from T19 onwards. As mentioned earlier, the bus master M1 has the priority for the bus-use right higher than that of the bus master M2 , therefore the request from the bus master M1 is prioritized over the other. Accordingly, the permission signal is outputted to the bus master M1, continuously from the third bus-occupancy period (T16 - T22) from T22 through T28, which is a fourth bus-occupancy period. Thus, the bus master M1 can transfer the command via the bus in the fourth bus-occupancy period.

Fig. 16 describes the operation, in which the permission signal with respect to the bus master M1 is dismissed once and outputted again to the bus master M1. However, the permission signal can be continuously outputted to the bus master M1 without any dismissal so that the bus master M1 is consecutively granted the bus-use right.

In the foregoing description, it is only required that the timing when the bus arbitration unit H outputs the permission signal and the bus-occupancy period correspond to each other. The bus arbitration unit H can arbitrate the requests from the bus masters during either the permission period or non-permission period.

In the embodiment 1, the case of processing four words was described to simplify the description. However, the present invention is not limited to the case, and is applicable to processing a command of variable length. In that case, a suitable bus-occupancy period is adjusted to thereby achieve the same effect as in the foregoing description.

The foregoing description exemplified the case where the plurality of bus masters operates at the same operation frequency. However, the present invention is not limited to the case. When the plurality of bus masters operate at different operation frequencies, the bus-occupancy period is set with regard to differences between the operation frequencies of the respective bus masters and the operation frequency of the common memory F to thereby realize the present invention.

A configuration in that case may be that a register for setting the bus-occupancy period stores therein the operation frequencies of the respective bus masters, the operation frequency of the common memory F, and differences in clock numbers for processing one word. Another possible configuration is that the register stores therein the operation frequencies of the respective bus masters and the common memory F, and the differences in the clock numbers for processing one word are calculated afterwards.

Further, each bus-occupancy period and each processing time of the common memory F may be arranged to be substantially equal to each other, other than the substantial identity of the respective summed processing time when the exclusive uses of the bus by the plurality of bus masters are terminated. In that case, the bus masters and the common memory can be efficiently operated in each bus-occupancy period, and further, the number of the commands stored in the command buffer can be reduced.

From the above description, it will be apparent what the present invention provides.

**Claims**

1. A resource management apparatus comprising:

   an information selection unit (C) having an operation speed different <u>from</u> an operation speed of a common resource (F) and selecting information comprised of a command and data transferred from any of a plurality of bus masters (M1-M5) to the common resource (F);
   a buffer unit (D) storing the information selected by the information selection unit (C); and
   <u>a selection interval setting unit (A) setting selection interval information</u>; and
   a timing adjustment unit (B) <u>determining a selection interval (TSO) based on the selection interval information</u>

set in the selection interval setting unit (A) and controlling timings of selecting the information in the information selection unit (C) so that a sum of selection time required for selecting a plurality of predetermined volumes of information in the information selection unit (C) and a sum of processing time of the common resource (F) are equal to each other.

**2.** A resource management apparatus as claimed in Claim 1, wherein the timing adjustment unit (B) is adapted to control the timings of selecting the information in the information selection unit (C) so that the selection time required for selecting a singular predetermined volume of information in the information selection unit (C) and the processing time of the common resource (F) are substantially equal to each other.

**3.** A resource management apparatus as claimed in Claim 1, wherein the timing adjustment unit (B) changes a comparison reference value (Tref) for counting in accordance with a stored information volume of the buffer unit (D).

**4.** A resource management apparatus as claimed in Claim 3, wherein the timing adjustment unit (B) lengthens selection intervals (TSO) by increasing the comparison reference value (Tref) when the stored information volume of the buffer unit (B) is larger than a threshold value (Qth).

**5.** A resource management apparatus as claimed in Claim 3, wherein the timing adjustment unit (B) prohibits the information selection with respect to the information selection unit (C) when the stored information volume of the buffer unit (D) is larger than the threshold value (Qth) and information from the bus master (M1-M5) having a highest priority is not transferred to the information selection unit (C).

**Patentansprüche**

**1.** Betriebsmittelmanagement-Vorrichtung, die umfasst:

eine Informationsauswahleinheit (C), die eine Betriebsgeschwindigkeit hat, die von einer Betriebsgeschwindigkeit eines gemeinsamen Betriebsmittels (F) verschieden ist, um Informationen auszuwählen, die einen Befehl und Daten enthalten und von irgendeinem von mehreren Bus-Mastern (M1-M5) an das gemeinsame Betriebsmittel (F) übertragen werden;
eine Puffereinheit (D), um die von der Informationsauswahleinheit (C) ausgewählten Informationen zu speichern; und
eine Auswahlintervall-Setzeinheit (A), um Auswahlintervallinformationen zu setzen; und
eine Zeiteinstelleinheit (B), um ein Auswahlintervall (TSO) anhand der in der Auswahlintervall-Setzeinheit (A) gesetzten Auswahlintervallinformationen zu bestimmen und um Zeiteinstellungen zum Auswählen der Informationen in der Informationsauswahleinheit (C) so zu steuern, dass eine Summe von Auswahlzeiten, die zum Auswählen mehrerer vorgegebener Informationsvolumina in der Informationsauswahleinheit (C) erforderlich sind, und eine Summe von Verarbeitungszeiten in dem gemeinsamen Betriebsmittel (F) einander gleich sind.

**2.** Betriebsmittelmanagement-Vorrichtung nach Anspruch 1, wobei die Zeiteinstelleinheit (B) dazu ausgelegt ist, die Zeiteinstellungen zum Auswählen der Informationen in der Informationsauswahleinheit (C) so zu steuern, dass die Auswahlzeit, die zum Auswählen eines einzigen vorgegebenen Informationsvolumens in der Informationsauswahleinheit (C) erforderlich ist, und die Verarbeitungszeit des gemeinsamen Betriebsmittels (F) im Wesentlichen einander gleich sind.

**3.** Betriebsmittelmanagement-Vorrichtung nach Anspruch 1, wobei die Zeiteinstelleinheit (B) einen Vergleichsreferenzwert (Tref) zum Zählen in Übereinstimmung mit einem gespeicherten Informationsvolumen der Puffereinheit (D) ändert.

**4.** Betriebsmittelmanagement-Vorrichtung nach Anspruch 3, wobei die Zeiteinstelleinheit (B) Auswahlintervalle (TSO) durch Erhöhen des Vergleichsreferenzwerts (Tref) verlängert, wenn das gespeicherte Informationsvolumen der Puffereinheit (B) größer als ein Schwellenwert (Qth) ist.

**5.** Betriebsmittelmanagement-Vorrichtung nach Anspruch 3, wobei die Zeiteinstelleinheit (B) die Informationsauswahl durch die Informationsauswahleinheit (C) verhindert, wenn das gespeicherte Informationsvolumen der Puffereinheit (D) größer als der Schwellenwert (Qth) ist und Informationen von dem Bus-Master (M1-M5) mit der höchsten Priorität nicht an die Informationsauswahleinheit (C) übertragen werden.

**Revendications**

1. Appareil de gestion de ressources, comprenant :

une unité de sélection d'informations (C) ayant une vitesse de fonctionnement différente d'une vitesse de fonctionnement d'une ressource commune (F) et sélectionnant des informations constituées d'un ordre et de données transférées depuis un quelconque parmi une pluralité de maîtres bus (M1-M5) vers la ressource commune (F) ;
une unité tampon (D) qui stocke les informations sélectionnées par l'unité de sélection d'informations (C) ; et
une unité de fixation d'intervalle de sélection (K) qui fixe des informations relatives à un intervalle de sélection ; et
une unité d'ajustement de temporisation (B) qui détermine un intervalle de sélection (TSO) en se basant sur les informations relatives à l'intervalle de sélection fixé dans l'unité de fixation d'intervalle de sélection (A) et qui commande les temporisations de sélection des informations dans l'unité de sélection d'informations (C) de sorte qu'une somme du temps de sélection requis pour sélectionner une pluralité de volumes prédéterminés d'informations dans l'unité de sélection d'informations (C) et une somme du temps de traitement de la ressource commune (F) sont mutuellement égales.

2. Appareil de gestion de ressources selon la revendication 1, dans lequel l'unité d'ajustement de temporisation (B) est adaptée à commander les temporisations de sélection des informations dans l'unité de sélection d'informations (C) de sorte que le temps de sélection requis pour sélectionner un volume prédéterminé singulier d'informations dans l'unité de sélection d'informations (C) et le temps de traitement de la ressource commune (F) sont sensiblement mutuellement égaux.

3. Appareil de gestion de ressources selon la revendication 1, dans lequel l'unité d'ajustement de temporisation (B) change une valeur de référence de comparaison (Tref) pour le comptage en accord avec un volume d'informations stocké de l'unité tampon (D).

4. Appareil de gestion de ressources selon la revendication 3, dans lequel l'unité d'ajustement de temporisation (B) allonge les intervalles de sélection (TSO) en augmentant la valeur de référence de comparaison (Tref) quand le volume d'informations stocké de l'unité tampon (B) est plus grand qu'une valeur seuil (Qth).

5. Appareil de gestion de ressources selon la revendication 3, dans lequel l'unité d'ajustement de temporisation (B) empêche la sélection d'informations à l'égard de l'unité de sélection d'informations (C) quand le volume d'informations stocké de l'unité tampon (D) est plus grand que la valeur seuil (Qth) et des informations provenant du maître-bus (M1-M5) ayant une priorité maximum ne sont pas transférées à l'unité de sélection d'informations (C).

# F I G. 1 A

transfer time

processing information selection interval — A (7) B (7) C (7) D (7) sum 28

processing time of common resource — A B C D sum 25
0    6.25    13.25    20.25    27.25

# F I G. 1 B

transfer time (4) (4) (4) (4)

processing information selection interval — A (4) B (4) C (4) D (4) sum 16

processing time of common resource — A B C D sum 25
0    6.25    12.5    18.75    25

# F I G. 2

M1   M2   M3   M4   M5

| bus master | bus master | bus master | bus master | bus master |

bus 0

bus 1

bus 2

timing adjustment unit    b

clock

B

A

selection interval setting unit

C

D

information selection unit

D1   D2

command buffer

data buffer

buffer unit

100

resource management apparatus

memory controller    e

clock    E

memory    F

# F I G. 3

# F I G. 4 A

clock

clock counter  | 08 | 10 | 18 | 20 | 28 | 30 | 06 | 0E | 16 | 1E | 26 | 2E | 04 | 0C | 14 | 1C | 24 | 2C | 02 | 0A | 12 | 1A | 22 | 2A | 00 |

N → 1  2  3  4  5  6  7  8  9  10  11  12  13  14  15  16  17  18  19  20  21  22  23  24  25

selection signal

P1    P2    P3    P4

# F I G. 4 B

<table>
<tr><td></td><td>first method</td><td>second method</td></tr>
<tr><td>first processing information<br>selection interval</td><td>$0 \xrightarrow{(7)} 7$<br><br>$7 - 6.25 = 0.75$<br>$6.25 - 0.75 = 5.5$</td><td>$0 \xrightarrow{(6.25)} 7$<br><br>$7 - 6.25 = 0.75$</td></tr>
<tr><td>second processing information<br>selection interval</td><td>$0 \xrightarrow{(5.5)} 6$<br><br>$6 - 5.5 = 0.5$<br>$6.25 - 0.5 = 5.75$</td><td>$0.75 \xrightarrow{(6.25)} 6.75$<br><br>$6.75 - 6.25 = 0.5$</td></tr>
<tr><td>third processing information<br>selection interval</td><td>$0 \xrightarrow{(5.75)} 6$<br><br>$6 - 5.75 = 0.25$<br>$6.25 - 0.25 = 6$</td><td>$0.5 \xrightarrow{(6.25)} 6.5$<br><br>$6.5 - 6.25 = 0.25$</td></tr>
<tr><td>fourth processing information<br>selection interval</td><td>$0 \xrightarrow{(6)} 6$</td><td>$0.25 \xrightarrow{(6.25)} 6.25$</td></tr>
</table>

EP 1 513 069 B1

# F I G. 5A

# F I G. 5B

# F I G. 5C

EP 1 513 069 B1

# F I G.  6

# F I G. 7

M1      M2      M3      M4      M5

| bus master | bus master | bus master | bus master | bus master |

bus 0

bus 1

bus 2

| timing adjustment unit    b |
| clock |

B

information selection unit

C      D1      D2

A

selection interval setting unit

Qc

| command buffer | data buffer |

buffer unit

D

200

resource management apparatus

| memory controller    E    e |
| clock |

F

| memory |

# F I G. 8

START

S21 $\quad$ CNT←CNT+1

S22 $\quad$ Qc≦Qth?  NO

YES

S24 $\quad$ TS0b≦CNT?  NO

S23 $\quad$ TS0a≦CNT?  NO

YES

YES

S26 $\quad$ CNT ← 0

S27 $\quad$ selection signal is set

S25 $\quad$ selection signal is reset

END

# F I G. 9

# F I G. 1 0

```
                    ┌──────────────┐
                    │    START     │
                    └──────┬───────┘
                           │
                           ▼
      S31          ╱─────────────────╲
               ╱      Is there          ╲        NO
              ╱   bus master of highest   ╲──────────┐
               ╲     priority ?          ╱           │
                ╲─────────────────────╱              │
                         │                           │
                        YES                          │
                         ▼                           │
      S32          ╱─────────────────╲               │
               ╱       Is there         ╲     NO     │
              ╱   processing information   ╲─────────▶│
              ╲  from bus master of highest╱          │
               ╲      priority ?         ╱            │
                ╲─────────────────────╱               ▼
                         │              S34    ╱─────────────────╲
                        YES                ╱                       ╲   NO
                         │                ╱        Qc ≦ Qth ?        ╲────┐
                         │                ╲                         ╱     │
                         │                 ╲─────────────────────╱        │
                         │                          │                     │
                         │                         YES                    │
      S33                ▼              S35         ▼                     │
          ┌───────────────────────┐      ┌──────────────────────┐        │
          │ request from bus master│      │ access request is    │        │
          │ of highest priority is │      │     selected         │        │
          │      selected          │      └──────────┬───────────┘        │
          └───────────┬────────────┘                 │                    │
                      │◄───────────────────────────────                    │
                      │◄────────────────────────────────────────────────────
                      ▼
               ┌──────────────┐
               │     END      │
               └──────────────┘
```

$Qc \leqq Qth$ ?

F I G. 1 1

| slot | 0 | 1 | 2 | 3 | 4 | 5 | 6 | 7 |
|---|---|---|---|---|---|---|---|---|
| bus A | 1 | 0 | 0 | 0 | 1 | 0 | 0 | 0 |
| bus B | 0 | 1 | 0 | 1 | 0 | 1 | 0 | 1 |
| bus C | 0 | 0 | 1 | 0 | 0 | 0 | 0 | 0 |

# F I G. 1 2

```
                    ┌─────────────────┐
                    │     START       │
                    └─────────────────┘
                             │
                             ▼
S41                  ╱───────────────────╲
              ┌─────┤  Is selection signal set ?  ├──── NO ────┐
              │      ╲───────────────────╱                      │
              │               │                                 │
              │              YES                    S44         ▼
              │               │                   ╱───────────────────╲    NO
 S42          │               ▼             ┌────┤ remaining transfer size ├────┐
    ┌─────────────────────────┐             │     ╲       > 0         ╱         │
    │  remaining transfer size │            │      ╲───────────────────╱        │
    │     is initialized       │            │               │                   │
    └─────────────────────────┘             │              YES                  │
 S43          │                             │ S45           │                   │
              ▼                             │               ▼                   │
    ┌─────────────────────────┐             │   ┌─────────────────────────┐     │
    │ access request is selected 1 │        │   │ access request is selected 2 │  │
    └─────────────────────────┘             │   └─────────────────────────┘     │
              │                             │               │                   │
              │◄────────────────────────────────────────────┘                   │
 S46          ▼                                                                  │
    ┌─────────────────────────┐                                                 │
    │  remaining transfer size │                                                │
    │      is renewed          │                                                │
    └─────────────────────────┘                                                 │
              │◄──────────────────────────────────────────────────────────────── ┘
              ▼
    ┌─────────────────┐
    │      END        │
    └─────────────────┘
```

26

# F I G. 13

# F I G. 1 4

START

S51 — Is there access command ? — NO → S60 — Is there prediction request command ? — NO

YES ↓ (S51)

S52 — writing command ? — NO → S54 — reading command = first-out command ?

S60 YES ↓ → S61 — Is there prediction command ? — NO

S54 YES

S52 YES ↓

S61 YES ↓

S53 — writing command is registered

S55 — mishit signal is outputted

S62 — first-out command ← prediction command

S56 — reading command is registered

S63 — prediction command is cleared

S57 — first-out command is cleared

S58 — prediction command is renewed

S59 — first-out command is renewed

S64 — first-out command is registered

END

# F I G. 1 5

H bus arbitration unit

# FIG. 16